# EUROPEAN PATENT APPLICATION

(11) **EP 4 617 026 A1**
(43) Date of publication of application: **17.09.2025**
(21) Application number: 24163458.3
(22) Date of filing: 14.03.2024
(51) Int. Cl.: B29B 7/28, B29B 7/74, B29B 7/82, B29B 7/10, B29B 7/18

(54) **APPARATUS AND METHOD FOR MIXING AND PROCESSING RUBBER**

(71) Applicant: Bridgestone Europe NV/SA, 1930 Zaventem (BE)
(72) Inventor: STRAFFI, Paolo, 00128 Roma (IT); KABAKOGLU, Duygu, 00128 Roma (IT); SBARRA, Alessandra, 00128 Roma (IT); DEL BONO, Mauro, 00128 Roma (IT); GALLO, Giorgio, 00128 Roma (IT)
(74) Representative: Marchetti, Alessio

(57) **Abstract**

Apparatus for mixing and processing rubber comprising means for mixing a first rubber mixture, wherein the first rubber mixture has a first temperature; and means for mixing a second rubber mixture, wherein the second rubber mixture has a second temperature; the means for mixing the second rubber mixture further comprising means for receiving at least one of the first rubber mixture or a third rubber mixture, wherein the third rubber mixture is based on the first rubber mixture; means for feeding premixed rubber to a chamber of the means for mixing the second rubber mixture, wherein the premixed rubber has a temperature which is equal to or lower than the first temperature of the first rubber mixture; and means for feeding cooling fluid to the chamber of the means for mixing the second rubber mixture, wherein the cooling fluid has a temperature which is equal to or lower than the first temperature of the first rubber mixture.

## Description

### TECHNICAL FIELD

### FIELD OF INVENTION

This disclosure is generally directed to an apparatus and method for mixing and processing rubber.

### BACKGROUND

In current rubber mixing processes, a rubber batch, or rubber mixture needs to be cooled down before proceeding with further mixing steps and subsequent finalization.

In general, a single internal mixer cannot perform all mixing steps at once to produce the final rubber batch, due to difficult controllable temperature variations of the rubber mixture. Thus, the rubber mixture must be cooled down after each mixing step, dissipating heat at low temperature by water and air cooling. In particular, the rubber mixture has to be cooled in a dedicated cooling tunnel (batch-off). Thus, usually more than one mixing step is necessary to complete the final product.

EP 4058262 A1 relates to a continuous mixing process. However, in a continuous mixing process it is difficult to achieve a similar productivity level compared to the productivity level achieved by internal mixers.

DE 4407144 A1 relates to a mixing apparatus using a first and a second internal mixer, wherein additional cold rubber is added to reduce the temperature of the rubber mixture. However, the dispersion of two different rubber mixtures alone requires time to achieve a uniform temperature of the final mixture.

To improve the current rubber mixing processes, new apparatuses and methods are needed to provide a more efficient and accelerated mixing and cooling process for processing rubber.

### SUMMARY

The above objective is achieved by the present disclosure of apparatuses and methods for mixing and processing rubber. The present invention proposes coupling multiple (e.g at least two) mixers (e.g. internal mixers) in series, wherein at least one mixer is provided with means for feeding premixed rubber (e.g. side rubber feeders) and means for feeding cooling fluid to achieve a rapid temperature adjustment of the processed rubber mixture.

According to a first aspect, the invention provides an apparatus for mixing and processing rubber. The apparatus comprises means for mixing a first rubber mixture, wherein the first rubber mixture has a first temperature, and means for mixing a second rubber mixture, wherein the second rubber mixture has a second temperature. The means for mixing the second rubber mixture further comprises means for receiving at least one of the first rubber mixture or a third rubber mixture, wherein the third rubber mixture is based on the first rubber mixture, means for feeding premixed rubber to a chamber of the means for mixing the second rubber mixture, wherein the premixed rubber has a temperature which is equal to or lower than the first temperature of the first rubber mixture, and means for feeding cooling fluid to the chamber of the means for mixing the second rubber mixture, wherein the cooling fluid has a temperature which is equal to or lower than the first temperature of the first rubber mixture.

An apparatus comprising more than one means for mixing a rubber mixture (e.g. means for mixing a first rubber mixture and means for mixing a second rubber mixture) allows that a first rubber mixture, mixed by means for mixing the first rubber mixture, can be transferred to, and further processed by the means for mixing the second rubber mixture.

Providing means for feeding premixed rubber and means for feeding cooling fluid to a chamber of the means for mixing the second rubber mixture allows that cold rubber and/or water is added before mixing the second rubber mixture. In this way, the rubber batch can be cooled down at a desired temperature level. For example, a series of coupled mixers, wherein at least one mixer comprises means for feeding premixed rubber and cooling fluid, allows adding all ingredients to the compound without executing separate rubber cooling (e.g. in a cooling tunnel) after each mixing step.

The combination of feeding cold premixed rubber together with feeding a cooling fluid to the chamber of the means for mixing the second rubber mixture will further speed up the cooling process of the rubber mixture. In this way, the capacity of the mixing system will be increased, and the total energy required to mix the rubber will be reduced. In particular, no unnecessary heating is dissipated during various cooling steps providing a more efficient and sustainable mixing process.

In an example, the means for mixing a first or second rubber mixture, may be an internal mixer.

In an example, the means for feeding premixed rubber may be a rubber dosing system.

In an example, a rubber dosing system may comprise a slab loader, a dosing system of grinded material, or an extruder.

In a further example, the means for feeding premixed rubber may be configured to feed cold or preheated rubber to the processed (e.g. first) rubber mixture. For example, the premixed rubber may be premixed in another internal mixer and/or may be received from a rubber buffer conveyor.

In an example, the temperature of the premixed rubber, or the temperature of the cooling fluids, which are fed to the chamber of the means for mixing the second rubber mixture may be below 120 °C, preferably below 100 °C. Thus, the (second) temperature of the (second) rubber mixture (mixed by the means for mixing the second rubber mixture) will be quickly reduced below 130 °C, preferably below 120 °C.

According to a second aspect, the apparatus may further comprise means for mixing the third rubber mixture, wherein the third rubber mixture may have a third temperature.

According to a further aspect, the means for mixing the third rubber mixture may be arranged between the means for mixing the first rubber mixture and the means for mixing the second rubber mixture.

This arrangement allows that the rubber is mixed by a series of mixing means. In particular, the rubber is firstly mixed be means for mixing the first rubber mixture, secondly mixed by the means for mixing the third rubber mixture and finally mixed by the means for mixing the second rubber mixture.

According to a preferred aspect, the means for mixing the second rubber mixture may be a means for mixing the final rubber mixture.

In an example, the means for mixing the third rubber mixture may be an intermediate mixer.

According to a third aspect, the means for mixing the first, second or third rubber mixture may comprise at least one rotating screw housed inside a chamber.

According to a further aspect, the apparatus may further comprise means for feeding additional components to the chamber of the means for mixing the first rubber mixture.

According to a further aspect, the apparatus may further comprise means for feeding additional components to the chamber of the means for mixing the second rubber mixture.

For example, the means for feeding additional components to the chamber of the means for mixing the first or second rubber mixture may be a powder or chemical dosing system.

According to a further aspect, the means for mixing the third rubber mixture may further comprise means for feeding premixed rubber to a chamber of the means for mixing the third rubber mixture,
According to a further aspect, the premixed rubber may have a temperature which is equal to or lower than the first temperature of the first rubber mixture.

According to a further aspect, the apparatus may further comprise means for feeding a cooling fluid to the chamber of the means for mixing the third rubber mixture.

According to a further aspect, the cooling fluid may have a temperature which is equal to or lower than the first temperature of the first rubber mixture.

According to a further aspect, the apparatus may further comprise means for feeding additional components to the means for mixing the third rubber mixture.

For example, the means for feeding additional components to the chamber of the means for mixing the third rubber mixture may be a powder, or chemical dosing system.

According to a further aspect, the means for feeding additional components to the chamber of the means for mixing the second rubber mixture may be adapted to feed a curing system, or curing systems to the chamber of the means for mixing second rubber mixture when the temperature of the second rubber mixture is below a predefined value.

For example, the predefined value may be 130°C, preferably 120°C.

It is beneficial to feed a curing system, or curing systems to the chamber of the means for mixing the rubber mixture when the temperature of the rubber mixture is below a predefined value. Dispersing the curing system, or curing chemical when the temperature of the rubber mixture is below a predefined value (e.g. below 130°C, or preferably below 120°) prevents that a curing reaction starts during mixing. Thus, a homogenous final mixture can be obtained.

According to a further aspect, the means for feeding additional components to the chamber of the means for mixing the third rubber mixture may be adapted to feed a curing system, or curing systems to the chamber of the means for mixing third rubber mixture when the temperature of the third rubber mixture is below a predefined value.

According to a further aspect, the means for feeding additional components to the chamber of the means for mixing the second (e.g. final) rubber mixture may be adapted to feed sulfur, peroxide, or another reactive crosslinking material to the chamber of the means for mixing the second (e.g. final) rubber mixture, when the temperature of the second (e.g. final) rubber mixture is below a predefined value.

In an example, the predefined value may be 130 °C, preferably 120 °C.

Dispersing the curing system, or curing chemical when the rubber mixture is below a predefined value (e.g. below 130°C, or preferably below 120°) prevents that a curing reaction starts during mixing. Thus, a homogenous final mixture can be obtained.

For example, in case of feeding additional components (e.g. additives) together with a cooling fluid and premixed rubber to a chamber of a means for mixing a rubber mixture, a crosslink agent like sulfur, may be added whenever the temperature of the mixture will drop below 140° and preferably below 130°C to prevent scorch. Thus, mixing time and dispersion can be optimized.

According to another aspect, the means for feeding additional components may be adapted to feed a curing system, or curing systems to the chamber of the means for mixing the second rubber mixture, when the temperature of the first or third rubber mixture is below a predefined value.

In an example, the predefined value may be 130°C and preferably 120°C.

According to a further aspect, the cooling fluid may further comprise at least one of liquid nitrogen, liquid carbon anhydride, or water.

According to a further aspect, the apparatus may further comprise means for applying vacuum to the chamber of the means for mixing the second rubber mixture.

By applying vacuum to the chamber of the means for mixing the second rubber mixture, excess of volatiles generated during cooling and/or during any reaction in the mixer (e.g. gas generated by evaporation of cooling fluids, or generated as reaction byproduct) can be reduced. Reducing, or removing excess volatiles is beneficial, as it reduces the porosity level of the produced rubber mixture.

According to a further aspect, the means for applying vacuum to the chamber of the means for mixing the second rubber mixture may be adapted to apply vacuum to the chamber of the means for mixing the second rubber mixture, after the cooling fluid is fed to the chamber of the means for mixing the second rubber mixture.

By applying vacuum to the chamber of the means for mixing the second rubber mixture, the gas generated by evaporation of cooling fluids can be reduced. Reducing, or removing the generated gas is beneficial, as it reduces the porosity level of the produced rubber mixture.

According to a further aspect, the apparatus may further comprise means for applying vacuum to the chamber of the means for mixing the third rubber mixture.

According to a further aspect, the means for applying vacuum to the chamber of the means for mixing the third rubber mixture may be adapted to apply vacuum to the chamber of the means for mixing the third rubber mixture, after the cooling fluid is fed to the chamber of the means for mixing the third rubber mixture.

According to a further aspect, the means for feeding a cooling fluid to the chamber of the means for mixing the second, or third rubber mixture may be adapted to spray the cooling fluid inside the chamber of the means for mixing the second, or third rubber mixture.

Spraying the cooling fluid inside the chamber of the means for mixing the rubber mixture allows uniformly quenching the surface of the rubber mixture during the mixing process.

In addition, a combination of feeding cold premixed rubber and feeding a cooling fluid by spraying the fluid inside the mixing chamber further speeds up the cooling of the processed rubber mixture.

According to a further aspect, the means for mixing the first, second, or third rubber mixture may comprise one of an internal mixer, two roll mills, or twin extruder mixer. For example, the internal mixer may be a tangential machine or an intermesh machine.

According to a further aspect, a volume of the chamber of the means for mixing the second rubber mixture may be larger than a volume of the chamber of the means for mixing the first, or third rubber mixture.

According to a further aspect, the volume of the chamber of the means for mixing the second rubber mixture may be at least 5% larger than the volume of the chamber of the means for mixing the previous (e.g. first, or third) rubber mixture.

According to a further aspect, the volume of the chamber of the means for mixing the second rubber mixture may be 20% to 75% larger than the volume of the chamber of the means for mixing the previous (e.g. first, or third) rubber mixture.

According to a further aspect, a volume of the chamber of the means for mixing the third rubber mixture may be larger than the volume of the chamber of the means for mixing the previous (e.g. first) rubber mixture.

According to a further aspect, the volume of the chamber of the means for mixing the third rubber mixture may be at least 5% larger than the volume of the chamber of the means for mixing the previous (e.g. first) rubber mixture.

According to a further aspect, the volume of the chamber of the means for mixing the third rubber mixture may be 20% to 75% larger than the volume of the chamber of the means for mixing the previous (e.g. first) rubber mixture.

According to a further aspect, the invention provides a method for mixing and processing rubber. The method comprises mixing, by means for mixing a first rubber mixture, a first rubber mixture, wherein the first rubber mixture has a first temperature. Mixing, by means for mixing a second rubber mixture, a second rubber mixture, wherein the second rubber mixture has a second temperature. Mixing the second rubber mixture comprises receiving, by means for mixing a second rubber mixture, at least one of the first rubber mixture or a third rubber mixture, wherein the third rubber mixture is based on the first rubber mixture, feeding premixed rubber to the chamber of the means for mixing the second rubber mixture, wherein the premixed rubber has a temperature which is equal to or lower than the first temperature of the first rubber mixture, and feeding a cooling fluid to the chamber of the means for mixing the second rubber mixture, wherein the cooling fluid has a temperature which is equal to or lower than the first temperature of the first rubber mixture.

### BRIEF DESCRIPTION OF THE DRAWINGS

Fig. 1 shows a schematic side view of an exemplary apparatus for mixing and processing rubber according to the prior art.
Fig. 2 shows a schematic side view of an exemplary apparatus for mixing and processing rubber according to embodiments of the present disclosure.
Fig. 3 shows a schematic side view of an exemplary apparatus for mixing and processing rubber according to embodiments of the present disclosure.
Fig. 4 shows a flow diagram illustrating a method for mixing and processing rubber according to embodiments of the present disclosure.
Fig. 5 shows a flow diagram illustrating a method for mixing and processing rubber according to embodiments of the present disclosure.

### DETAILED DESCRIPTION

The present disclosure provides apparatuses and methods for mixing and processing rubber. The apparatuses and methods according to this disclosure offer many advantages. The invention allows improving the rubber mixing process, when rubber cooling is needed during the mixing. The present disclosure provides multiple (e.g., at least two) mixers coupled in series, wherein the apparatus comprises means for feeding premixed rubber (e.g. side rubber feeders) and means for feeding cooling fluid to a mixing chamber to achieve a rapid temperature variation of the processed rubber mixture.

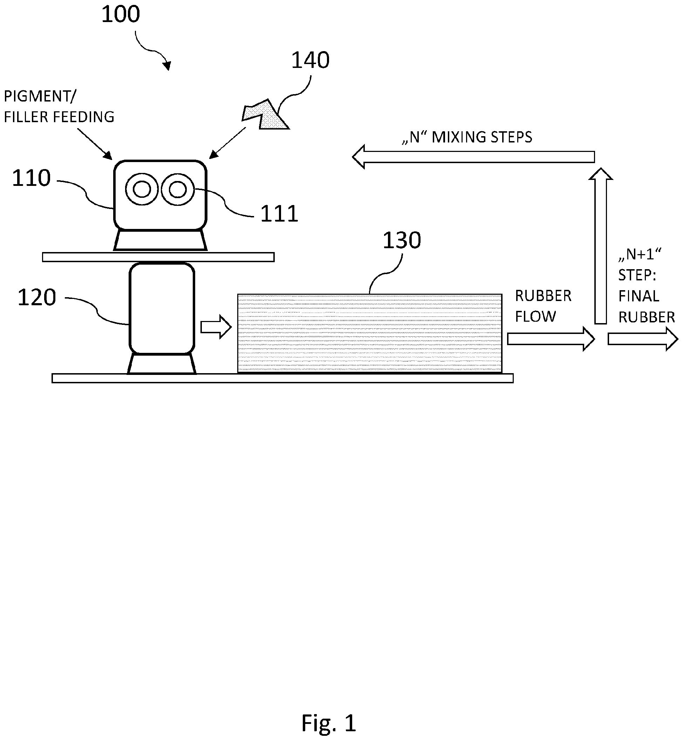

Fig. 1 shows a schematic side view of an exemplary apparatus 100 for mixing and processing rubber according to the prior art.

In well-known rubber mixing systems, a single rubber mixer 110 (e.g. a single internal mixer, as illustrated in Fig, 1) is often used for rubber processing. However, a single rubber mixer cannot perform all mixing steps at once due to the difficulties to control temperature variation during the mixing process.

As illustrated in Fig. 1, the single rubber mixer (e.g., means for mixing a rubber mixture) may be an internal mixer comprising least one rotating screw 111 housed inside a chamber. In Fig. 1, the single rubber mixer 110 is fed with rubber, or rubber components 140 together with additional pigments and/or fillers.

After a first mixing step, the rubber mixture is transferred to a sheeter 120 and afterwards to a cooling line or cooling tunnel 130 (batch-off) to cool down the rubber mixture. After the first mixing and cooling step is finished, the rubber mixture is reintroduced to the single rubber mixer 110 and the process is repeated. Usually, more than one mixing step (e.g. N mixing steps) is necessary to complete the final product.

Thus, new apparatuses and methods are needed to provide a more efficient and accelerated mixing process to produce the final rubber batch.

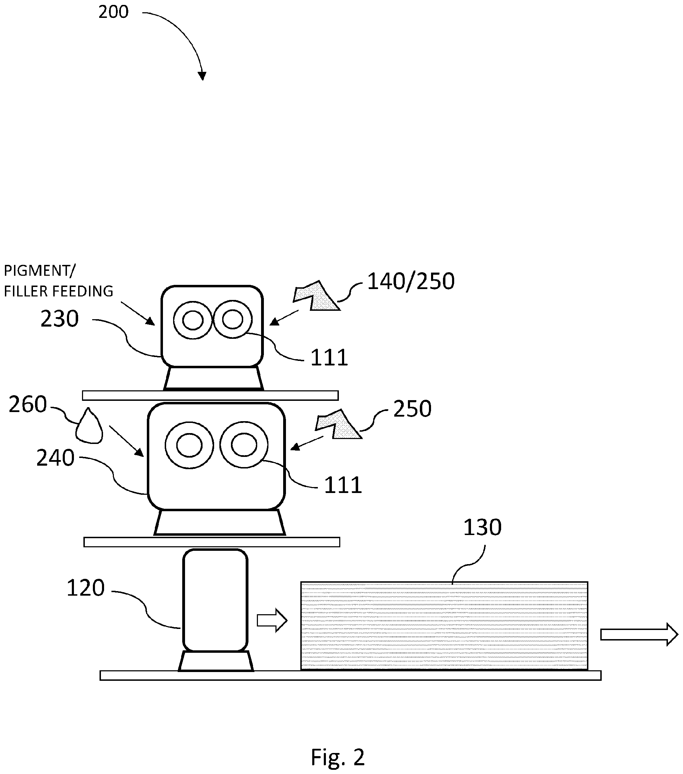

Fig. 2 shows a schematic side view of an exemplary apparatus for mixing and processing rubber according to embodiments of the present disclosure.

In an embodiment, illustrated in Fig. 2, the apparatus 200 comprises means 230 for mixing a first rubber mixture, wherein the first rubber mixture has a first temperature, and means 240 for mixing a second rubber mixture, wherein the second rubber mixture has a second temperature. The means 240 for mixing the second rubber mixture further comprises means for receiving the first rubber mixture, means for feeding premixed rubber 250 to a chamber of the means 240 for mixing the second rubber mixture, wherein the premixed rubber 250 has a temperature which is equal to or lower than the first temperature of the first rubber mixture, and means for feeding cooling fluid 260 to the chamber of the means 240 for mixing the second rubber mixture, wherein the cooling fluid has a temperature which is equal to or lower than the first temperature of the first rubber mixture.

A mixing apparatus comprising more than one means for mixing a rubber mixture (e.g. means 230 for mixing a first rubber mixture and means 240 for mixing a second rubber mixture) improves the efficiency of the rubber mixing process.

In the embodiment of Fig. 2, the first rubber mixture processed by the means 230 for mixing the first rubber mixture is transferred to the means 240 for mixing the second rubber mixture. In particular, the means 240 for mixing the second rubber mixture may comprise means for feeding premixed rubber 250 and means for feeding cooling fluid 260 to a chamber of the means 240 for mixing the second rubber mixture. Thus, premixed rubber 250, which is typically a cold rubber mixture and thus also called "cold rubber 250" herein, and/or cooling fluids 260 (e.g. water) can be added to the rubber (or chamber of the means for mixing the second rubber mixture) before the rubber mixing, so that the rubber batch can be cooled down to a desired temperature level. In particular, coupling at least two means for mixing a rubber mixture (e.g. internal mixers) in series wherein means for feeding premixed rubber 250 and/or cooling fluid 260 are provided, allows avoiding separate rubber cooling (e.g. in a cooling tunnel) after each mixing step.

The combination of feeding cold premixed rubber together with feeding a cooling fluid further speeds up the cooling process of the rubber mixture to a desired temperature value. In this way, the capacity of the mixing system will be increased, and the total energy required to mix the rubber will be reduced. In particular, no unnecessary heating is dissipated during various cooling steps providing a more efficient and sustainable process.

In another exemplary embodiment illustrated in Fig. 2, rubber, or rubber components 140 may be fed to the means 230 for mixing the first rubber mixture. Optional, additional pigments and/or fillers may be fed to the means 230 for mixing the first rubber mixture, or the means 240 for mixing the second rubber mixture.

In an optional embodiment and as illustrated in Fig. 2, the apparatus may further comprise a sheeter 120 and/or a cooling line 130. In this exemplary embodiment, the rubber mixture is transferred from the means for mixing the second rubber mixture to a sheeter 120 and afterwards to a cooling line 130 (batch-off) to further cool down the rubber mixture. In the cooling line, heat is dissipated at low temperature e.g. by water and air cooling.

In a further embodiment, a straining process might be added whenever a gear pump is added to the last mixer discharge layout. Thus, dispersion can be further improved and the presence of undispersed material in the mixed mixture can be prevented and/or the compound viscosity can be reduced to a desired level.

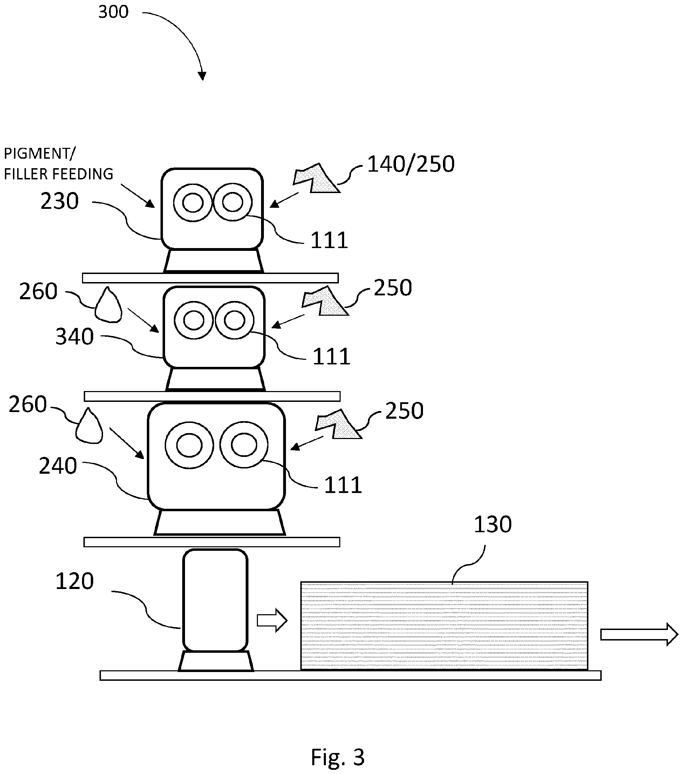

Fig. 3 shows a schematic side view of an exemplary apparatus for mixing and processing rubber according to embodiments of the present disclosure.

In an embodiment illustrated in Fig. 3, the apparatus 300 comprises (similar to Fig. 2) means 230 for mixing a first rubber mixture, wherein the first rubber mixture has a first temperature, and means 240 for mixing a second rubber mixture, wherein the second rubber mixture has a second temperature. The means 240 for mixing the second rubber mixture further comprises means for receiving a third rubber mixture, wherein the third rubber mixture is based on the first rubber mixture, means for feeding premixed rubber 250 to a chamber of the means 240 for mixing the second rubber mixture, wherein the premixed rubber 250 has a temperature which is equal to or lower than the first temperature of the first rubber mixture, and means for feeding cooling fluid 260 to the chamber of the means 240 for mixing the second rubber mixture, wherein the cooling fluid has a temperature which is equal to or lower than the first temperature of the first rubber mixture.

In the embodiment of Fig. 3, the apparatus 300 may further comprise means 340 for mixing the third rubber mixture, wherein the third rubber mixture may have a third temperature, and wherein the means 340 for mixing the third rubber mixture may be arranged between the means 230 for mixing the first rubber mixture and the means 240 for mixing the second rubber mixture.

In the embodiment of Fig. 3, the means 340 for mixing the third rubber mixture may further compromise means for receiving the first rubber mixture.

In another embodiment (not shown in Fig. 3), the means 340 for mixing the third rubber mixture may be arranged after the means 240 for mixing the second rubber mixture.

In an embodiment, cooling fluid and premixed rubber may be added together to the means for mixing the first, second, or third rubber mixture.

In another embodiment, cooling fluid and premixed rubber may be added directly one after the other to the means for mixing the first, second, or third rubber mixture.

Means 340 for mixing a third rubber mixture arranged between the means 230 for mixing the first rubber mixture and the means 240 for mixing the second rubber mixture allows that the rubber is mixed by a series of mixing means. In particular, the rubber is mixed firstly by means 230 for mixing the first rubber mixture, mixed secondly by the means 340 for mixing the third rubber mixture and finally mixed by the means 240 for mixing the second rubber mixture.

In an exemplary embodiment, the means 340 for mixing the third rubber mixture may be an intermediate mixer.

In an exemplary embodiment, the means for mixing the third rubber mixture may be adapted to complete silica silane reaction, wherein the rubber mixture is finalized by the means for mixing the second rubber mixture.

In an exemplary embodiment of Fig. 3, the apparatus 300 may be adapted to carry out reactive mixing (e.g. novolac polycondensation) during the mixing of the third rubber mixture.

For example, the premixed rubber 250 may have a temperature below 120°C, and preferably below 100°C when it is fed to the chamber of the means 340 for mixing the third rubber mixture. Thus, the rubber mixture can be mixed at a desired temperature where chemical reaction may occur.

In an exemplary embodiment of Fig. 2 or Fig. 3, the means 230/250/340 for mixing a first, second, or third rubber mixture may be an internal mixer.

In a further embodiment of Fig. 2 or Fig. 3, the means 230/250/340 for mixing the first, second, or third rubber mixture may comprise at least one rotating screw 111 housed inside a chamber.

In a further embodiment (illustrated in Fig. 3), the means 340 for mixing the third rubber mixture may further comprise means for feeding premixed rubber 250 to a chamber of the means 340 for mixing the third rubber mixture, wherein the premixed rubber 250 may have a temperature which is equal to or lower than the first temperature of the first rubber mixture.

In a further embodiment (illustrated in Fig. 3), the means 340 for mixing the third rubber mixture may further comprise means for feeding a cooling fluid 260 to the chamber of the means 340 for mixing the third rubber mixture, wherein the cooling fluid 260 may have a temperature which is equal to or lower than the first temperature of the first rubber mixture.

For example, the first rubber mixture may have a temperature above 140 °C. To achieve a temperature below 120 °C in the final mixer, cold premixed rubber (e.g. with room temperature of 25 °C) may be added to achieve a fast quenching of the rubber mixture at high temperature.

In an illustrative example and taking into account that a similar rubber material with a comparable specific heat will be used in the process, it is assumed that the added cold and premixed rubber should comply with the following rule: The added cold premixed rubber (having a temperature ≈ 25 °C) should be equal to or higher than 4/15 in mass of added material in the masterbatch (having a temperature ≥ 140 °C), preferably higher than 1/3.

In an exemplary embodiment, the means for feeding premixed rubber 250 may be a rubber dosing system.

In an exemplary embodiment, the rubber dosing system may comprise a slab loader, or a dosing system of grinded material, or an extruder.

In an exemplary embodiment, the means for feeding premixed rubber 250 may be adapted to feed a cold or preheated rubber mixture to the chamber of the respective mixer.

In an exemplary embodiment, the premixed rubber 250 may be premixed in another internal mixer, or may be fed from a rubber buffer conveyor to quickly adjust the rubber temperature at the desired level.

In a further embodiment, the means 240 for mixing the second rubber mixture may be a means for mixing the final rubber mixture.

In a further embodiment (not shown in Fig. 2, or Fig. 3), the apparatus 200/300 may further comprise means for feeding additional components to the chamber of the means 230 for mixing the first, second, or third rubber mixture.

In a further embodiment, the means for feeding additional components to the chamber of the means 230/240/340 for mixing the first, second, or third rubber mixture may be a powder or chemical dosing system.

In a further embodiment, the means for feeding additional components to the chamber of the means for mixing the second rubber mixture may be adapted to feed a curing system or curing systems to the chamber of the means 240 for mixing second rubber mixture when the temperature of the second rubber mixture is below a predefined value.

In an exemplary embodiment, the predefined value may be 130°C and preferably 120°C.

It is beneficial to feed a curing system or curing systems to the chamber of the means for mixing the rubber mixture, when the temperature of the rubber mixture is below a predefined value. Dispersing the curing system, or curing chemical when the rubber mixture is below a predefined value (e.g. below 130°C, or preferably below 120°) prevents that a curing reaction starts during mixing. Thus, a homogenous final mixture can be obtained.

In an exemplary embodiment, the temperature of the premixed rubber 250, or the temperature of the cooling fluids 260 fed to the chamber of the means 240 for mixing the second rubber mixture is below 120°C, preferably below 100°C. This allows that the (second) temperature of the (second) rubber mixture, which is mixed by the means 250 for mixing the second rubber mixture, will be quickly reduced below 130 °C, preferably below 120 °C.

In a further exemplary embodiment, wherein a curing chemical is processed in the last mixer of the series and the premixed rubber 250 and/or the cooling fluid 260 are added at a temperature below 100°C (e.g. for rubber and for water), so that the rubber temperature of the blend will be quickly reduced below 130°C and preferably below 120°C. In case of cooling fluids like liquid nitrogen, or liquid carbon anhydride, the temperature should be below - 190 and -80°C respectively.

In a further embodiment, the means for feeding additional components to the chamber of the means for mixing the third rubber mixture may be adapted to feed a curing system, or curing systems to the chamber of the means for mixing third rubber mixture when the temperature of the third rubber mixture is below a predefined value.

In a further embodiment, the means for feeding additional components to the chamber of the means 240 for mixing the second (e.g. final) rubber mixture may be adapted to feed sulfur, peroxide, or another reactive crosslinking material to the chamber of the means 240 for mixing the second (or final) rubber mixture when the temperature of the second (or final) rubber mixture is below a predefined value.

In an exemplary embodiment, the predefined value may be 130°C and preferably 120°C.

Dispersing the curing system or curing chemical when the rubber mixture is below a predefined value (e.g. below 130°C, or preferably below 120°) prevents that a curing reaction starts during mixing.

In an exemplary embodiment, wherein additional components (e.g. additives) are fed together with cooling fluid and premixed rubber to a chamber of a means for mixing a rubber mixture (e.g. means for mixing a first, or second rubber mixture), a crossilink agent like sulfur, may be added whenever the temperature of the mixture will drop below 140° and preferably below 130°C to prevent scorch. This procedure allows optimization of mixing time and dispersion.

According to another embodiment, the means for feeding additional components may be adapted to feed a curing system or curing systems to the chamber of the means 240 for mixing the second rubber mixture, when the temperature of the previously mixed rubber mixture (e.g. first or third rubber mixture) is below a predefined value.

In an example, the predefined value may be 130°C and preferably 120°C.

In a further embodiment (e.g. illustrated in Fig. 2, or 3), the cooling fluid 260 may further comprise at least one of liquid nitrogen, liquid carbon anhydride, or water.

In a further embodiment (not shown in Fig. 2, or 3), the apparatus may further comprise means for applying vacuum to the chamber of the means for mixing the second, or third rubber mixture.

For example, vacuum is achieved, when the pressure in the chamber of the means for mixing the second, or third rubber mixture is lower than the ambient pressure of the mixing apparatus. For example, the pressure in the chamber of the means for mixing the second, or third rubber mixture may be reduced by 0.05 bar, preferably by 0.1 bar with respect to ambient pressure.

By applying vacuum to the chamber of the means for mixing the second, or third rubber mixture, excess of volatiles generated during cooling and/or during any reaction in the mixer (e.g. gas generated by evaporation of cooling fluids, or generated as reaction byproduct) can be reduced. Reducing, or removing excess volatiles is beneficial, as it reduces the porosity level of the produced rubber mixture.

In a further embodiment (not shown in Fig. 2, or 3), the means for applying vacuum to the chamber of the means for mixing the second, or third rubber mixture may be adapted to apply vacuum to the chamber of the means for mixing the second, or third rubber mixture, after the cooling fluid is fed to the chamber of the means for mixing the respective rubber mixture.

By applying vacuum to the chamber of the means for mixing the second, or third rubber mixture, the gas generated by evaporation of cooling fluids can be reduced. Reducing, or removing the generated gas is beneficial, as it reduces the porosity level of the produced rubber mixture.

In a further embodiment (not shown in Fig. 2, or 3), the means for feeding a cooling fluid 260 to the chamber of the means 240/340 for mixing the second, or third rubber mixture may be adapted to spray the cooling fluid 260 inside the chamber of the means 240/340 for mixing the second, or third rubber mixture.

Spraying the cooling fluid inside the chamber of the means for mixing the rubber mixture allows uniformly quenching the surface of the rubber mixture during the mixing process.

In addition, a combination of feeding cold premixed rubber and feeding cooling fluid by spraying the fluid inside the chamber further speeds up the cooling of the processed rubber mixture.

According to a further embodiment, the means 230/240/340 for mixing the first, second, or third rubber mixture may comprise one of an internal mixer, two roll mills, or twin extruder mixer. For example, the internal mixer may be a tangential machine or an intermesh machine.

In a further embodiment the last mixer of the series (e.g. mixer 240, illustrated in Fig. 3) should have a mixing volume at least 5% greater compared to the previous one (e.g. mixer 340, illustrated in Fig. 3) and preferably between 20 and 75% greater compared to the previous one.

In a further embodiment (illustrated in Fig. 2), a volume of the chamber of the means 240 for mixing the second rubber mixture may be larger than a volume of the chamber of the means 230 for mixing the first rubber mixture.

In a further embodiment (illustrated in Fig. 2), the volume of the chamber of the means for mixing the second rubber mixture may be at least 5% larger than the volume of the chamber of the means for mixing the first rubber mixture.

In a further embodiment (illustrated in Fig. 2), the volume of the chamber of the means for mixing the second rubber mixture may be 20% - 75% larger than the volume of the chamber of the means for mixing the first rubber mixture.

In a further embodiment (not illustrated in Fig. 3), a volume of the chamber of the means 340 for mixing the third rubber mixture may be larger than the volume of the chamber of the means for mixing the first rubber mixture.

In a further embodiment (not illustrated in Fig. 3), the volume of the chamber of the means for mixing the third rubber mixture may be at least 5% larger than the volume of the chamber of the means for mixing the first rubber mixture.

In a further embodiment (not illustrated in Fig. 3), the volume of the chamber of the means for mixing the third rubber mixture may be 20% - 75% larger than the volume of the chamber of the means for mixing the first rubber mixture.

In a further embodiment (illustrated in Fig. 3), a volume of the chamber of the means 240 for mixing the second rubber mixture may be larger than a volume of the chamber of the means 340 for mixing the third rubber mixture.

In a further embodiment (illustrated in Fig. 3), the volume of the chamber of the means 240 for mixing the second rubber mixture may be at least 5% larger than the volume of the chamber of the means 340 for mixing the third rubber mixture.

In the following, an example of an apparatus comprising a series of three mixers (e.g. means of mixing a first, second and third rubber mixture) is provided.

In this example, rubber fillers and pigments may be added to a first (internal) mixer (as illustrated in Fig. 2, and 3). After mixing a rubber mixture in the first mixer, the first mixer may discharge the rubber mixture in an intermediate mixer. The intermediate mixer may be a reactive mixer, wherein a chemical reaction may occur. However, a reactive mixer is only an optional choice and is not mandatory in a respective series of mixers. Preferably, the volume of the intermediate mixer should be 5% greater compared to the volume of the first mixer. After further mixing the rubber mixture, the intermediate mixer will discharge the rubber mixture into a final mixer. The volume of the final mixer volume should be at least 5% greater compared to the previous one and preferably between 20 and 75% greater compared to the previous one.

In another embodiment, the series of mixer may only comprise a series of two mixers (e.g. a first and a final mixer), as illustrated in Fig. 2.

In another embodiment (not illustrated in Fig. 2, or Fig. 3), the apparatus of the present invention may comprise a series of N mixers (e.g means for mixing a rubber mixture), wherein N may be 10, preferably wherein N may be 5. Each mixer can be identified as mixer "i", wherein "i" can vary from 1 to N. The volume of mixer "i+1" should preferably be 5% larger compared to previous mixer "i".

In addition, cooling fluids to quickly cool down the temperature may also be fed to the first or to mixer "i-1" whenever a lower mixing temperature will be required in mixer "i".

In addition, vacuums during mixing might be required to eliminate excess of volatiles generated during cooling and/or during any reaction in the mixer in the previous step.

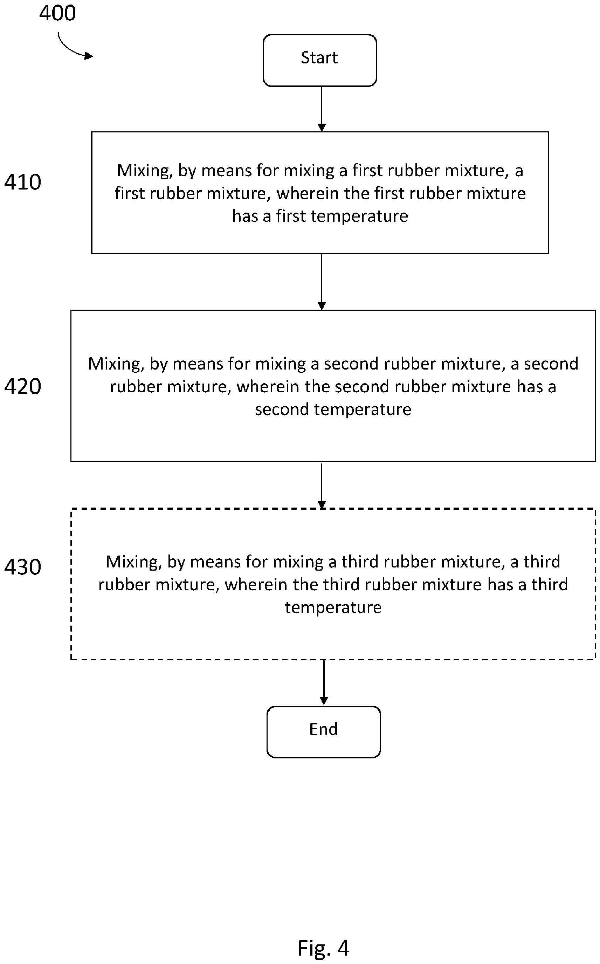

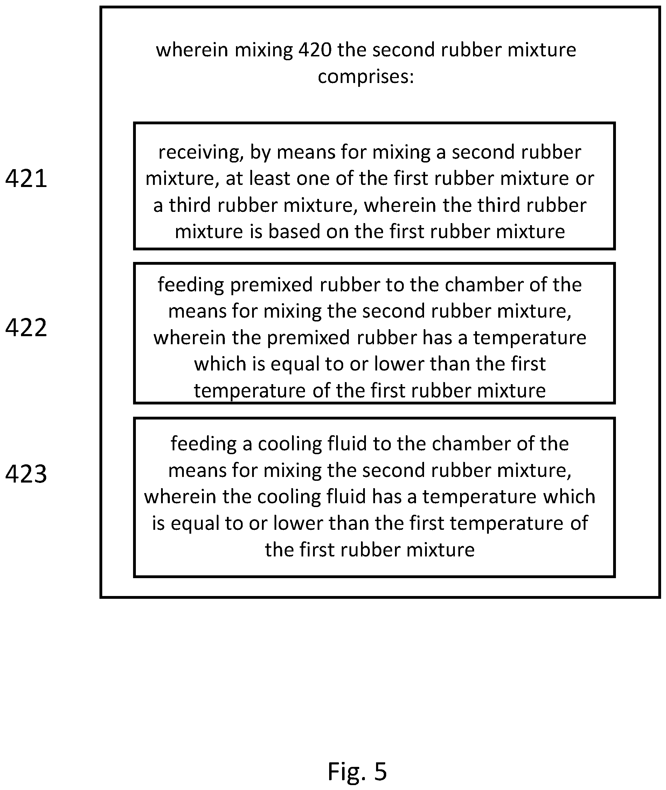

Fig. 4 and Fig. 5 are related to flow diagrams illustrating a method for mixing and processing rubber according to embodiments of the present disclosure.

According to an embodiment, the invention provides a method 400 for mixing and processing rubber. The method 400 comprises mixing 410, by means for mixing a first rubber mixture, a first rubber mixture, wherein the first rubber mixture has a first temperature. Mixing 420, by means for mixing a second rubber mixture, a second rubber mixture, wherein the second rubber mixture has a second temperature. Mixing 420 the second rubber mixture comprises receiving 421, by means for mixing the second rubber mixture, at least one of the first rubber mixture or a third rubber mixture, wherein the third rubber mixture is based on the first rubber mixture, feeding 422 premixed rubber to the chamber of the means for mixing the second rubber mixture, wherein the premixed rubber has a temperature which is equal to or lower than the first temperature of the first rubber mixture, and feeding 423 a cooling fluid to the chamber of the means for mixing the second rubber mixture, wherein the cooling fluid has a temperature which is equal to or lower than the first temperature of the first rubber mixture.

In a further embodiment (as illustrated in Fig. 4), the method 400 may further comprises mixing 430, by means for mixing a third rubber mixture, a third rubber mixture, wherein the third rubber mixture has a third temperature.

In a further embodiment, mixing 430 the third rubber mixture may further comprise receiving, by means for mixing the third rubber mixture, the first rubber mixture.

In a further embodiment, mixing 430 the third rubber mixture may further comprise feeding premixed rubber to a chamber of the means for mixing the third rubber mixture, wherein the premixed rubber may have a temperature which is equal to or lower than the first temperature of the first rubber mixture.

In a further embodiment, mixing 430 the third rubber mixture may further comprise feeding a cooling fluid to the chamber of the means for mixing the third rubber mixture, wherein the cooling fluid may have a temperature which is equal to or lower than the first temperature of the first rubber mixture.

In the following, an example of a method having a series of three mixing steps is provided.

In this example, rubber fillers and pigments may be added to a first (internal) mixer (as illustrated in Fig. 2, and 3). After a mixing process in the first mixer, the first mixer may discharge a first rubber mixture in an intermediate mixer (the intermediate mixer corresponds to the means for mixing the third rubber mixture in Fig. 3). For example, the intermediate mixer may be a reactive mixer, wherein a chemical reaction may occur. However, a reactive mixer can be optional and is not mandatory in the series of mixers. After further mixing the rubber mixture, the intermediate mixer may discharge the rubber mixture into a final mixer (the final mixer corresponds to the means for mixing the second rubber mixture in Fig. 3).

In a further embodiment, the method may further comprise feeding additional components to the chamber of the means for mixing the first, second, or third rubber mixture.

In a further embodiment, feeding additional components to the chamber of the means for mixing the second, or third rubber mixture may further comprise feeding a curing system, or curing systems to the chamber of the means for mixing second, or third rubber mixture, when the temperature of the second, or third rubber mixture is below a predefined value.

In a further example, feeding additional components to the chamber of the means for mixing the second (e.g. final) rubber mixture may comprise feeding sulfur, peroxide, or another reactive crosslinking material to the chamber of the means for mixing the second (e.g. final) rubber mixture when the temperature of the second (e.g. final) rubber mixture is below a predefined value.

In another embodiment, feeding additional components may comprise feeding a curing system, or curing systems to the chamber of the means for mixing the second rubber mixture, when the temperature of the first or third rubber mixture is below a predefined value.

In a further embodiment, the method may further comprise applying vacuum to the chamber of the means for mixing the second or third rubber mixture (e.g. after a cooling fluid is fed to the chamber of the means for mixing the second, or third rubber mixture).

In a further embodiment, feeding 423 a cooling fluid to the chamber of the means for mixing the second, or third rubber mixture may further comprise spraying the cooling fluid inside the chamber of the means for mixing the second, or third rubber mixture.

### LIST OF REFERENCE SIGNS AS USED IN THE DRAWINGS

- 100/200/300: apparatus
- 110: single rubber mixer
- 111: rotating screw
- 120: sheeter
- 130: cooling line
- 140: rubber, or rubber components
- 230: means for mixing the first rubber mixture
- 240: means for mixing the second rubber mixture
- 250: premixed rubber
- 260: cooling fluid
- 340: means for mixing the third rubber mixture

## Claims

1. An apparatus for mixing and processing rubber, the apparatus comprises:
means for mixing a first rubber mixture, wherein the first rubber mixture has a first temperature; and
means for mixing a second rubber mixture, wherein the second rubber mixture has a second temperature;
wherein the means for mixing the second rubber mixture further comprises;
means for receiving at least one of the first rubber mixture or a third rubber mixture, wherein the third rubber mixture is based on the first rubber mixture;
means for feeding premixed rubber to a chamber of the means for mixing the second rubber mixture, wherein the premixed rubber has a temperature which is equal to or lower than the first temperature of the first rubber mixture;
means for feeding cooling fluid to the chamber of the means for mixing the second rubber mixture, wherein the cooling fluid has a temperature which is equal to or lower than the first temperature of the first rubber mixture.

2. Apparatus according to claim 1, wherein the apparatus further comprises means for mixing the third rubber mixture, wherein the third rubber mixture has a third temperature;
preferably, wherein the means for mixing the third rubber mixture is arranged between the means for mixing the first rubber mixture and the means for mixing the second rubber mixture,
further preferably, wherein the means for mixing the second rubber mixture is a means for mixing the final rubber mixture.

3. Apparatus according to any of the preceding claims, wherein the means for mixing the first, or second rubber mixture comprises at least one rotating screw housed inside a chamber; or
apparatus according to claim 2 or 3, wherein the means for mixing the third rubber mixture comprises at least one rotating screw housed inside a chamber.

4. Apparatus according to any of the preceding claims, the apparatus further comprises at least one of:
means for feeding additional components to the chamber of the means for mixing the first rubber mixture;
means for feeding additional components to the chamber of the means for mixing the second rubber mixture.

5. Apparatus according to any of the preceding claims 2 to 4, wherein the means for mixing the third rubber mixture further comprises at least one of:
means for feeding premixed rubber to a chamber of the means for mixing the third rubber mixture;
means for feeding a cooling fluid to the chamber of the means for mixing the third rubber mixture;
means for feeding additional components to the means for mixing the third rubber mixture.

6. Apparatus according to any of claims 4 or 5, wherein the means for feeding additional components to the chamber of the means for mixing the second rubber mixture is adapted to feed a curing system to the chamber of the means for mixing second rubber mixture when the temperature of the second rubber mixture is below a predefined value; or
wherein the means for feeding additional components to the chamber of the means for mixing the third rubber mixture is adapted to feed a curing system to the chamber of the means for mixing third rubber mixture when the temperature of the third rubber mixture is below a predefined value; or
wherein the means for feeding additional components to the chamber of the means for mixing the second rubber mixture is adapted to feed sulfur, peroxide, or another reactive crosslinking material to the chamber of the means for mixing the second rubber mixture when the temperature of the second rubber mixture is below a predefined value.

7. Apparatus according to any of the preceding claims, wherein the means for feeding additional components is adapted to feed a curing system to the chamber of the means for mixing the second rubber mixture, when the first, or third temperature of the first, or third rubber mixture is below a predefined value.

8. Apparatus of any of the preceding claims, wherein the cooling fluid further comprises at least one of liquid nitrogen, liquid carbon anhydride, or water.

9. Apparatus according to any of the preceding claims, wherein the apparatus further comprises means for applying vacuum to the chamber of the means for mixing the second rubber mixture;
preferably, wherein the means for applying vacuum to the chamber of the means for mixing the second rubber mixture is adapted to apply vacuum to the chamber of the means for mixing the second rubber mixture, after the cooling fluid is fed to the chamber of the means for mixing the second rubber mixture.

10. Apparatus according to any of claims 5 to 9, wherein the apparatus further comprises means for applying vacuum to the chamber of the means for mixing the third rubber mixture;
preferably, wherein the means for applying vacuum to the chamber of the means for mixing the third rubber mixture is adapted to apply vacuum to the chamber of the means for mixing the third rubber mixture, after the cooling fluid is fed to the chamber of the means for mixing the third rubber mixture.

11. Apparatus of according to any of the preceding claims, wherein the means for feeding a cooling fluid to the chamber of the means for mixing the second rubber mixture is adapted to spray cooling fluid inside the chamber of the means for mixing the second rubber mixture.

12. Apparatus according to any of the preceding claims, wherein the means for mixing the first, or second rubber mixture comprises one of an internal mixer, two roll mills, or twin extruder mixer; or
apparatus according to any of claims 2 to 12, wherein the means for mixing the third rubber mixture comprises one of an internal mixer, two roll mills, or twin extruder mixer.

13. Apparatus according to any of the preceding claims, wherein a volume of the chamber of the means for mixing the second rubber mixture is larger than a volume of the chamber of the means for mixing the first, or rubber mixture;
preferably the volume of the chamber of the means for mixing the second rubber mixture is at least 5% larger than the volume of the chamber of the means for mixing the first, or third rubber mixture;
more preferably the volume of the chamber of the means for mixing the second rubber mixture is 20% - 75% larger than the volume of the chamber of the means for mixing the first, or third rubber mixture.

14. Apparatus according to any of preceding claims 2 to 12, wherein a volume of the chamber of the means for mixing the third rubber mixture is larger than the volume of the chamber of the means for mixing the first rubber mixture;
preferably the volume of the chamber of the means for mixing the third rubber mixture is at least 5% larger than the volume of the chamber of the means for mixing the first rubber mixture;
more preferably the volume of the chamber of the means for mixing the third rubber mixture is 20% - 75% larger than the volume of the chamber of the means for mixing the first rubber mixture.

15. A method for mixing and processing rubber, the method comprises:
mixing, by means for mixing a first rubber mixture, a first rubber mixture, wherein the first rubber mixture has a first temperature; and
mixing, by means for mixing a second rubber mixture, a second rubber mixture, wherein the second rubber mixture has a second temperature;
wherein mixing the second rubber mixture comprises:
receiving, by means for mixing the second rubber mixture, at least one of the first rubber mixture or a third rubber mixture, wherein the third rubber mixture is based on the first rubber mixture;
feeding premixed rubber to the chamber of the means for mixing the second rubber mixture, wherein the premixed rubber has a temperature which is equal to or lower than the first temperature of the first rubber mixture;
feeding a cooling fluid to the chamber of the means for mixing the second rubber mixture, wherein the cooling fluid has a temperature which is equal to or lower than the first temperature of the first rubber mixture.
